# EUROPÄISCHE PATENTSCHRIFT

(11) **EP 2 238 876 B1**
(45) Veröffentlichungstag und Bekanntmachung des Hinweises auf die Patenterteilung: **10.07.2013**
(21) Anmeldenummer: 10155806.2
(22) Anmeldetag: 08.03.2010
(51) Int. Cl.: A47J 31/00, A47J 31/057, A47J 31/24

(54) **Verfahren zum Erzeugen eines frischen kalten Kaffeegetränks und eine entsprechende Kaffeemaschine**
Method for producing a fresh cold coffee drink and a corresponding coffee machine
Procédé de production d'une boisson à base de café fraîche et froide et une machine à café correspondante

(30) Priorität: 08.04.2009 DE 102009016506
(43) Veröffentlichungstag der Anmeldung: 13.10.2010
(73) Patentinhaber: Melitta SystemService GmbH & Co., Kommanditgesellschaft, 32429 Minden-Dützen (DE)
(72) Erfinder: Buchholz, Bernd, Dr., 32369 Rahden (DE); Schmalkuche, Jens, 33803 Steinhagen (DE); Tintelnot, Peter, 32425 Minden (DE)
(74) Vertreter: Dantz, Jan Henning

(56) Entgegenhaltungen:
- WO-A2-01/12035
- US-A- 4 757 752
- US-A- 4 920 871
- US-A- 5 113 752
- US-A- 5 803 320

## Beschreibung

Die Erfindung betrifft ein Verfahren zum Erzeugen eines frischen kalten Kaffeegetränks aus einer vorgegebenen Menge Kaffeemehl und eine entsprechende Kaffeemaschine als Vollautomat vorzugsweise in der Art einer Kolbenmaschine.

Frische Kaffeegetränke sind auf übliche Weise zum Beispiel mittels einer Filterkaffeemaschine herstellbar. Ferner können frische Kaffeegetränke mittels Kolbenmaschinen (so genannte Spezialitätenmaschinen) zubereitet werden. Zur Bereithaltung größerer Mengen von Filterkaffee sind isolierte Behälter mit entsprechender Einrichtung zur Warmhaltung erforderlich.

Die US 5 113 752 offenbart ein Verfahren zum Erzeugen eines frischen kalten Kaffeegetränks aus einer vorgegebenen Menge Kaffeemehls, mit folgenden Verfahrensschritten: Zuführen der vorgegebenen Menge Kaffeemehls in eine Brühkammer; Erstellen eines Kaffeekonzentrats aus der zugeführten vorgegebenen Menge Kaffeemehls mittels eines Brühvorgangs in der Brühkammer, und Erzeugen eines frischen kalten Kaffeegetränks durch Vermischen des so erstellten Kaffeekonzentrats mit einer Wassermenge.

Kolbenmaschinen erzeugen Kaffeegetränke mit einem hohen Anteil an Trüb- und Schwebstoffen, die bei einem typischen Filterkaffee nicht gewünscht sind. Der Grund hierfür liegt darin, dass bei Kolbenmaschinen die gesamte Getränkemenge mit hohem Druck durch eine Brüheinheit geleitet wird, wobei ggf. ein geringer Anteil heißen Wassers, der aber deutlich kleiner als die Menge der durch die Brüheinheit geführten Menge ist, zum Beispiel über einen Bypass, nachträglich zugeführt wird. Die bei diesem Verfahren aus dem Kaffeemehl gelösten Trüb- und Schwebstoffe gelangen in das trinkfertige Getränk. Diese Trüb- und Schwebstoffe sind bei von den Kolbenmaschinen zubereiteten Produkten gewünscht, wie beispielsweise für Espresso- und Schümli-Produkte. Daher ist die Zubereitung von Produkten, welche einem Filterkaffee ähnlich sind, auf diesen Maschinen bisher nicht möglich.

DE 44 09 030 C2 beschreibt ein Verfahren zur Herstellung von Kaffeegetränk und eine dafür geeignete Kaffeemaschine mit einem Bypass. Das Kaffeegetränk wird aus einer vorgegebenen Menge Kaffeemehls und einer darauf abgestimmten Menge Heißwasser erstellt, wobei nur eine Teilmenge des Heißwassers zum Extrahieren durch das Kaffeemehl geleitet wird und in einen Vorratsbehälter fließt. Die restliche Teilmenge wird unter Umgehung des Kaffeemehls direkt in den Vorratsbehälter geführt. Die Bypassmenge wird so gesteuert, dass zu jedem Zeitpunkt eine trinkbare Kaffeequalität im Vorratsbehälter vorliegt. Mit diesem Verfahren wird versucht, die beim Brühprozess entstehenden Schwankungen der Kaffeestärke auszugleichen.

Eine bekannte Möglichkeit zur Herstellung eines kalten Kaffeegetränks ist die Herstellung einer Kaffeespezialität, vorzugsweise ein Espresso, mit einer Kolbenmaschine, die dann über Eiswürfel gegeben wird. Diese Art der Herstellung ist durch die Kombination von Eiswürfel mit kleinerer Menge an Kaffee gekennzeichnet, wobei sich in erster Linie aufgrund des vorhandenen nicht aufgelösten Eises das spezielle Trinkerlebnis ergibt.

Bei einer anderen Art zur Herstellung eines kalten Kaffeegetränks wird zum Beispiel normaler Filterkaffee mit einer Filterkaffeemaschine erzeugt und in Behälter gefüllt, in welchen er eine längere Zeit bis auf Raumtemperatur abkühlt. Der so abgekühlte Kaffee wird dann aus den Behältern entnommen und ggf. mit Eis aufgefüllt serviert. Dieses Getränk ist jedoch aufgrund der relativ langen Abkühlzeit zum Zeitpunkt der Ausgabe nicht mehr frisch.

Bei diesem Verfahren ist eine Vorratslagerung großer Mengen gebrühten Filterkaffees notwendig, da zum Abkühlen eine relativ lange Abkühlzeit erforderlich ist. Kühlmittel zum Kühlhalten können zusätzlichen Energieaufwand bedeuten.

Die Aufgabe der vorliegenden Erfindung ist es daher, ein verbessertes Verfahren zum Erzeugen eines frischen kalten Kaffeegetränks bereitzustellen. Eine weitere Aufgabe besteht darin, eine verbesserte entsprechende Kaffeemaschine zu schaffen.

Die Aufgabe wird durch ein Verfahren mit den Merkmalen des Anspruchs 1 sowie durch eine Kaffeemaschine mit den Merkmalen des Anspruchs 6 gelöst.

Danach ist vorgesehen, mit einer Kaffeemaschine vorzugsweise in der Art einer Kolbenmaschine (Spezialitätenmaschine) ein frisch zubereitetes Kaffeegetränk kalt zu erzeugen, indem eine kleine Menge warrnen, extrem konzentrierten Kaffeeextraktes frisch zubereitet wird und mit einer überproportionalen großen - im Anspruch 1 definierten - Mengen Kaltwassers vermischt wird, so dass ein angenehm kühles trinkbares Kaffeegetränk mit einem für Filterkaffee üblichen Trockensubstanzanteil und Geschmack entsteht.

Eine Kaffeemaschine vorzugsweise in der Art einer Kolbenmaschine zur Erzeugung frischer Kaffeegetränke weist die Merkmale des Anspruchs 6 auf und vorzugsweise einen mit der Brühkammer und dem Kaltwasserzulauf verbundenen Getränkeauslauf zum Auslass frischer Kaffeegetränke vorzugsweise als Einzel- bzw. Mehrfachportion zur direkten Ausgabe oder in einen Sammelbehälter zur Vorratslagerung.

Damit wird gegenüber der herkömmlichen Vorgehensweise durch Ausgabe eines frisch zubereiteten kalten Getränks ein deutlich verbesserter Frischeaspekt erzielt.

Weiterhin ergibt sich eine bedeutende Einsparung im Bereich benötigter Vorratsvolumina und eingesetzter Komponenten zur Abkühlung kalter Kaffeegetränke da die Getränke bedarfsgerecht zubereitet werden.

Zur Erzeugung eines frischen kalten Kaffeegetränks kann durch die Vermischung mit Kaltwasser, vorzugsweise Leitungswasser, eine aktive Kühlung des Getränks entfallen. Eine Warte- bzw. Abkühlzeit ist nicht erforderlich. Das frische kalte Kaffeegetränk besitzt als Ausgabetemperatur annähernd die Temperatur des zur Verfügung stehenden Kaltwassers. Dabei kann die Ausgabetemperatur bevorzugt höchstens 15 K, besonders bevorzugt höchstens 10 K und ganz besonders bevorzugt höchstens 5 K oberhalb der Kaltwassertemperatur liegen.

Durch die sehr geringe Menge von heißem Kaffeekonzentrat im Gegensatz zu der heißen Kaffeemenge bei einem normalen Brühvorgang ist ein bedeutend geringerer Energieaufwand zur Abkühlung eines frischen kalten Kaffeegetränks gegenüber der herkömmlichen Weise erforderlich.

Ferner wird eine deutlich einfachere Handhabung (Vorratsbefüllung, Entsorgung Kaffeesatz) erzielt.

Für die gewünschte Ausgabemenge wird eine vorgegebene Menge von Kaffeemehl in die Brühkammer geleitet, zum Beispiel über frische Mahlung von Kaffeebohnen in einem Mahlwerk oder über schon fertig gemahlenes Kaffeemehl. Dieser so genannte Kaffeekuchen wird für das Brühverfahren jedoch nicht angepresst. Der Brühvorgang wird mit einem Vorbrühen begonnen, welches in der Brühkammer drucklos für einen vorgebbaren, begrenzten Zeitabschnitt bei einer vorgebbaren Temperatur erfolgt.

Anschließend wird ein Brühvorgang der vorgebrühten Menge Kaffeemehls bei einem festlegbaren Druck durchgeführt. Hierbei muss der Heißwasserdruck weniger als 2 bar betragen.

Bevor die Konzentration des gebrühten Kaffeekonzentrats ein vorgebbares Vielfaches der Konzentration einer normalen Trinkqualität für Filterkaffee mit ca. 1,2 bis 1,4 % Trockensubstanzanteil unterschreitet, wird der Brühvorgang abgebrochen. Das vorgebbare Vielfache der Konzentration ist zumindest das Fünffache der Konzentration der normalen Trinkqualität.

Das so produzierte Kaffeekonzentrat wird mit Zugabe von Kaltwasser bis zur gewünschten Getränkemenge vermischt. Dabei wird zum Erzeugen eines frischen, kalten Kaffeegetränks beim Vermischen frisches Leitungswasser oder auf eine vorgebbare Temperatur gekühltes Wasser verwendet. Das Kaltwasser kann auch aus einem entsprechend gekühlten Speicherbehälter entnommen werden. Es kann bevorzugt eine Temperatur von weniger als 35°C, besonders bevorzugt von weniger als 20°C oder ganz besonders bevorzugt eine Temperatur im Bereich von 10°C bis 0°C aufweisen.

Somit kann sofort ein frisches kaltes Kaffeegetränk erzeugt werden.

Nach Auspressen des ausgebrühten Kaffeekuchens wird anschließend ein Entsorgen des ausgepressten Kaffeekuchens aus der Brühkammer in ein entsprechendes Behältnis vorgenommen.

Eine erfindungsgemäße Kaffeemaschine ist zur Durchführung des obigen Verfahrens vorgesehen.

Die Kaffeemaschine weist einen Heißwasserzulauf zur Brühkammer und einen Kaltwasserzulauf zur Getränkeausgabe auf. Diese Zuläufe können mit steuerbaren Ventilen und Mengenmesseinrichtungen versehen sein. Der Heißwasserzulauf kann eine Heizeinrichtung und der Kaltwasserzulauf eine Kühleinrichtung aufweisen.

Zur Ermittlung der Konzentration des Kaffeekonzentrats ist vorzugsweise zumindest ein Konzentrationssensor an der Brühkammer angeordnet. Die Konzentration des Kaffeekonzentrats kann auch über vorab ermittelte und in der Steuereinrichtung gespeicherte Werte basierend auf dem Verhältnis Kaffeemehlmenge, Mahlgrad und Wassermenge bestimmt werden.

Die Erfindung wird nun anhand von Ausführungsbeispielen mit Bezug auf die beigefügten Zeichnungen näher erläutert. Hierbei zeigt:
- Fig. 1: ein schematisches Blockschaltbild eines Ausführungsbeispiels einer erfindungsgemäßen Kaffeemaschine; und
- Fig. 2: ein Flussdiagramm eines Ausführungsbeispiels eines erfindungsgemäßen Verfahrens.

Gleiche Bauelemente bzw. Funktionseinheiten mit gleicher Funktion sind mit gleichen Bezugszeichen in den Figuren gekennzeichnet.

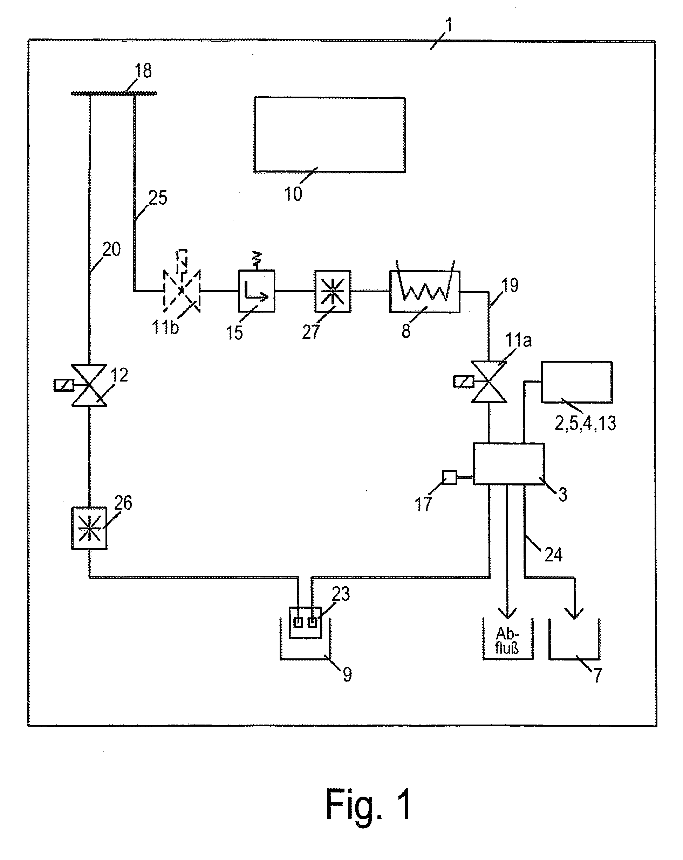

In Fig. 1 ist ein schematisches Blockschaltbild eines Ausführungsbeispiels einer erfindungsgemäßen Kaffeemaschine 1 in Art einer Kolbenmaschine dargestellt.

Die Kaffeemaschine 1 weist Folgendes auf: eine Vorratseinrichtung 2 für Kaffeemehl mit einer Dosiereinrichtung 5, eine Brühkammer mit Auspresseinrichtung 3, einen Heißwasserzulauf 19 mit einer Heizeinrichtung 8 und einem Heißwasserventil 11, einen Kaltwasserzulauf 20 mit einem Kaltwasserventil 12, einem Getränkeauslauf 23, einen Behälter 7 und eine Steuereinrichtung 10. Die Steuereinrichtung 10 ist mit allen Sensoren und Aktoren verbunden (nicht dargestellt) und steuert die Kaffeemaschine gemäß Eingabebefehlen einer Eingabe (nicht gezeigt) und vorprogrammierter bzw. vorgebbarer und von außen einstellbarer Parameter und Abläufe.

Weiterhin ist der Kaltwasserzulauf eines Heißwasserstrangs 25 mit einer Druckregelvorrichtung 15 versehen. An der Brühkammer 3 bzw. in dieser ist alternativ ein Konzentrationssensor 17 angeordnet. In dem Heißwasserzulauf 19 oder im Kaltwasserzulauf des Heißwasserstrangs 25 und dem Kaltwasserzulauf 20, wie auch in der Dosiereinrichtung 5 können Mengenmesseinrichtungen 26, 27 vorgesehen sein.

Weiterhin können die Brühkammer 3, der Heißwasserzulauf 19 und der Kaltwasserzulauf 20 mit nicht gezeigten Temperatursensoren ausgerüstet sein, die mit der Steuereinrichtung 10 verbunden sind.

Das Heißwasserventil 11a und das Kaltwasserventil 12 sind zusammen mit ihren Eingängen mit einem Wasserleitungsnetz 18 verbunden.

Es wird nun die Zubereitung eines frischen kalten Kaffeegetränks beschrieben.

Zur Zubereitung eines frischen kalten Kaffeegetränks wird zunächst eine gewünschte Menge Kaffeemehl aus der Vorratseinrichtung 2 über die Dosiereinrichtung 5, welche zwischen Vorratseinrichtung 2 und der Brühkammer 3 angeordnet ist, in die Brühkammer 3 befördert. In der Brühkammer 3 wird ein Kaffeekonzentrat erstellt, indem zunächst ein Vorbrühen mit Heißwasser aus dem Heißwasserzulauf 19 bei einer vorgebbaren Temperatur in vorgebbarer Menge erfolgt. Dazu wird das Heißwasserventil 11 a oder b durch die Steuereinheit 10, zum Beispiel elektromagnetisch, geöffnet, und Leitungswasser aus dem Leitungswassernetz strömt in die Heizeinrichtung 8 zum Aufheizen und von dort in die Brühkammer 3. Das Kaffeemehl in der Brühkammer 3 wird auch als Kaffeekuchen bezeichnet. Es wird nicht angepresst. Das Vorbrühen erfolgt drucklos. Ein Zulaufdruck des Heißwassers wird von der Druckregelvorrichtung 15 überwacht. Die Steuereinrichtung 10 regelt über das Heißwasserventil 11 a oder b, welches zum Beispiel ein Stellventil sein kann, die benötigte Heißwassermenge.

Dieses Vorbrühen erfolgt während eines vorgebbaren Zeitabschnitts, gesteuert durch die Steuereinrichtung 10.

Anschließend erfolgt ein Brühvorgang in der Brühkammer 3 bei einem Druck von weniger als 2 bar, zum Beispiel 1,8 bar. Dazu wird das Heißwasser nun unter diesem Druck, der mittels Druckregelvorrichtung 15 regelbar ist, über den Heißwasserzulauf 19 durch die Brühkammer 3 mit dem Kaffeemehl geleitet.

Sobald der in der Steuerung in Abhängigkeit von der eingesetzten Kaffeemehlmenge gespeicherte Grenzwert für die Brühmenge oder bis die Konzentration K des erstellten Kaffeekonzentrats, ermittelt über einen Konzentrationssensor 17, einen vorgebbaren Grenzwert erreicht hat und bevor sie darunter fällt, wird der Brühvorgang in der Brühkammer 3 durch die Steuereinrichtung 10 abgebrochen, indem der Zulauf von Heißwasser unterbrochen wird. Der vorgebbare Grenzwert ist mindestens das Fünffache der Grenze der normal definierten Trinkqualität für Filterkaffee. Diese normal definierte Trinkqualität für Filterkaffee betrifft Filterkaffee mit ca. 1,2 bis 1,4 % Trockensubstanzanteil.

Nach dem Brühvorgang oder parallel zum Brühvorgang wird das erstellte Kaffeekonzentrat mit frischem Kaltwasser aus dem Kaltwasserzulauf 20 bis zur gewünschten Getränkemenge aufgefüllt. Die Temperatur des Kaltwasser ist bevorzugt weniger als 35°C, besonders bevorzugt weniger als 20°C und ganz besonders bevorzugt liegt sie im Bereich von 10°C bis 0°C. Diese Temperatur kann der Temperatur des Leitungswassers aus dem Wasserleitungsnetz 18 entsprechen, aus welchem das Kaltwasser hier entnommen wird. Zusätzliche Kühleinrichtungen können vorgesehen sein. Die Temperatur des Kaltwassers kann mittels Temperatursensoren, die nicht gezeigt sind, überwacht werden.

Das Kaffeekonzentrat und das Kaltwasser werden dazu zum Getränkeauslauf 23 geleitet und von dort in ein Ausgabegefäß 9, zum Beispiel eine Tasse, oder ein Speicherbehältnis, zum Beispiel eine Kaffeekanne, gegeben.

Der ausgepresste Kaffeekuchen wird sodann aus der Brühkammer 3 über einen Ausgang 24 in einen Behälter entsorgt, und die Brühkammer 3 ist für eine neue Zubereitung startbereit.

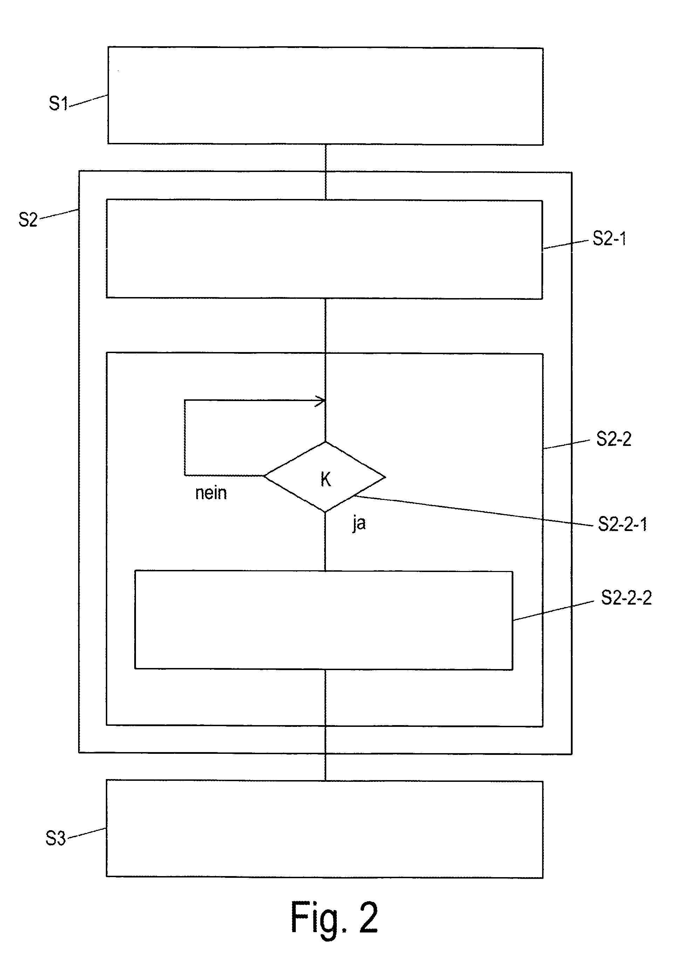

Fig. 2 zeigt ein Flussdiagramm eines Ausführungsbeispiels eines erfindungsgemäßen Verfahrens zum Zubereiten eines frischen Kaffeegetränks mit der oben beschriebenen Kaffeemaschine.

In einem ersten Verfahrensschritt S1 wird eine vorgegebene Menge Kaffeemehl in die Brühkammer 3 geleitet.

In einem zweiten Verfahrensschritt S2 wird ein Kaffeekonzentrat aus der zugeführten vorgegebenen Menge Kaffeemehls mittels eines Brühvorgangs in der Brühkammer 3 hergestellt, wobei das so erstellte Kaffeekonzentrat ein vorgebbares Vielfaches V einer Konzentration KN einer normalen Trinkqualität für Filterkaffee mit ca. 1,2 bis 1,4 % Trockensubstanzanteil aufweist

Dabei erfolgt das Herstellen des Kaffeekonzentrats in mehreren Teilschritten. Zunächst wird die vorgegebene Menge Kaffeemehl drucklos, in einen vorgebbaren, begrenzten Zeitabschnitt, vorgebrüht (S2-1) und dann anschließend der Brühvorgang, weitergeführt, indem Heißwasser bei einem festlegbaren Druck von kleiner als 2 bar, zum Beispiel mit 1,8 bar, durch dass Kaffeemehl in der Brühkammer gedrückt wird. (S2-2).

In einem weiteren Teilschritt (S2-2-1) wird beim Brühen eine Konzentration K des Kaffeekonzentrats entweder durch Vergleich der eingesetzten Kaffeemehlmenge und dem Volumenstrom heißen Wassers mit in der Steuereinheit gespeicherten Vorgabewerten oder durch Vergleich des über einen Konzentrationssensors analysierten Wert mit dem in der Steuereinheit gespeicherten Vorgabewert ermittelt .

Bevor die Konzentration K des gebrühten Kaffeekonzentrats ein vorgebbares Vielfaches VK, mindestens das Fünffache, der Konzentration KN einer normalen Trinkqualität für Filterkaffee mit ca. 1,2 bis 1,4 % Trockensubstanzanteil unterschreitet, wird das Brühen beendet (S2-2-2).

In einem dritten Verfahrensschritt S3 erfolgt ein Erzeugen eines frischen kalten Kaffeegetränks durch Vermischen des so erstellten Kaffeekonzentrats mit einer Wassermenge, welche einem vorgebbaren Vielfachen VM der Menge des erstellten frischen Kaffeekonzentrats entspricht.

Die Erfindung ist nicht auf die oben beschriebenen Ausführungsbeispiele beschränkt, sondern sie ist im Rahmen der beigefügten Ansprüche modifizierbar.

Es ist zum Beispiel denkbar, dass die Ausgabetemperatur des frischen kalten Getränks von einem Benutzer der Kaffeemaschine vorwählbar ist.

### Bezugszeichenliste

- 1: Kaffeemaschine
- 2: Vorratseinrichtung
- 3: Brühkammer
- 4: Vorratsabschnitt
- 5: Dosiereinrichtung
- 6: Auspresseinrichtung
- 7: Behälter
- 8: Heizeinrichtung
- 9: Ausgabegefäß (Tasse oder Vorratsbehälter)
- 10: Steuereinrichtung
- 11: 11 a: Kaltwasserventil des Heißwasserstrangs
11 b: Heißwasserventil des Heißwasserstrangs
- 12: Kaltwasserventil
- 13: Mahlwerk
- 14: Auslassventil
- 15: Heißwasserdrucksensor
- 16: Kaltwasserdrucksensor
- 17: Konzentrationssensor
- 18: Wasserleitungsnetz
- 19: Heißwasserzulauf
- 20: Kaltwasserzulauf
- 21: Kaffeezufuhr
- 22: Konzentratzulauf
- 23: Getränkeauslauf
- 24: Reinigungsausgang
- 25: Kaltwasserzulauf zum Heißwasserstrang
- 26: Wassermengenzähleinrichtung
- 27: Wassermengenzähleinrichtung
- K: Konzentration
- KN: Normale Konzentration
- VK: Vielfaches Konzentration
- VM: Vielfaches Menge

## Patentansprüche

1. Verfahren zum Erzeugen eines frischen kalten Kaffeegetränks aus einer vorgegebenen Menge Kaffeemehls, mit folgenden Verfahrensschritten:
(S1) Zuführen der vorgegebenen Menge Kaffeemehls in eine Brühkammer (3);
(S2) Erstellen eines Kaffeekonzentrats aus der zugeführten vorgegebenen Menge Kaffeemehls mittels eines Brühvorgangs in der Brühkammer (3), wobei das so erstellte Kaffeekonzentrat ein vorgebbares Vielfaches (VK) einer Konzentration (KN) einer normalen Trinkqualität für Filterkaffee mit ca. 1,2 bis 1,4 % Trockensubstanzanteil aufweist;
(S3) Erzeugen eines frischen kalten Kaffeegetränks durch Vermischen des so erstellten Kaffeekonzentrats mit einer Wassermenge, welche einem vorgebbaren Vielfachen (VM) der Menge des erstellten frischen Kaffeekonzentrats entspricht, wobei das Erstellen des Kaffeekonzentrats folgende Teilschritte aufweist:
(S2-1) druckloses Vorbrühen der vorgegebenen Menge Kaffeemehls; und
(S2-2) anschließendes Brühen der vorgebrühten Menge Kaffeemehls bei einem definierten Druck, und wobei beim anschließenden Brühen die folgenden Teilschritte ausgeführt werden: (S2-2-1) Erzeugen einer Konzentration (K) des Kaffeekonzentrats; und (S2-2-2) Beenden des Brühens, bevor die Konzentration (K) des gebrühten Kaffeekonzentrats das vorgebbare Vielfache (VK) der Konzentration (KN) einer normalen Trinkqualität für Filterkaffee mit ca. 1,2 bis 1,4 % Trockensubstanzanteil unterschreitet, wobei ferner das vorgebbare Vielfache (VK) der Konzentration (KN) der normalen Trinkqualität zumindest das Fünffache der Konzentration (KN) der normalen Trinkqualität ist.

2. Verfahren nach Anspruch 1, **dadurch gekennzeichnet, dass** das drucklose Vorbrühen mittels einer vorgebbaren Vorbrühmenge Heißwassers für einen vorgebbaren, begrenzten Zeitabschnitt erfolgt, und dass das anschließende Brühen der vorgegebenen Menge Kaffeemehls mittels einer vorgebbaren Brühmenge Heißwassers bei einem Wasserdruck von weniger als 2 bar erfolgt.

3. Verfahren nach einem der vorhergehenden Ansprüche, **dadurch gekennzeichnet, dass** zum Erzeugen eines frischen, kalten Kaffeegetränks, welches eine niedrige Ausgabetemperatur, bevorzugt von höchstens 15 K oberhalb der Kaltwassertemperatur, aufweist, beim Vermischen frisches Leitungswasser oder auf eine vorgebbare Temperatur gekühltes Wasser verwendet wird.

4. Verfahren nach Anspruch 3, **dadurch gekennzeichnet, dass** das frische, kalte Kaffeegetränk eine Ausgabetemperatur besonders bevorzugt von höchstens 10 K oberhalb der Kaltwassertemperatur aufweist.

5. Verfahren nach Anspruch 4, **dadurch gekennzeichnet, dass** das frische, kalte Kaffeegetränk eine Ausgabetemperatur ganz besonders bevorzugt von höchstens 5 K oberhalb der Kaltwassertemperatur aufweist.

6. Kaffeemaschine (1) als Vollautomat vorzugsweise in der Art einer Kolbenmaschine zur Erzeugung frischer kalter Kaffeegetränke zur Durchführung des Verfahrens nach einem der vorhergehenden Ansprüche, mit:
einer Vorratseinrichtung (2) für fertig gemahlenes oder bedarfsgerecht aus ganzen Bohnen gemahlenes Kaffeemehl oder eine Mahlvorrichtung zur Herstellung von Kaffeemehl aus ganzen Bohnen;
vorzugsweise einer Druckregelvorrichtung (15) zur bedarfsgerechten zum Verfügungstellen des Wasserdrucks;
einer Brühkammer (3) zur Herstellung frischer Kaffeekonzentrate aus dem Kaffeemehl;
einer Dosiereinrichtung (5) zur Dosierung des Kaffeemehls aus der Vorratseinrichtung (2) oder der Mahlvorrichtung in die Brühkammer (3);
einem mit der Brühkammer (3) verbundenen Heißwasserzulauf (19) zum Vorbrühen und Brühen der Kaffeekonzentrate;
einer Überwachungseinheit (10) zur Vermittlung einer Konzentration (K) gebrühter Kaffeekonzentrate;
einem mit dem Auslauf (23) verbundenen Kaltwasserzulauf (20) für Kaltwasser;
vorzugsweise einer Vorrichtung zur Entsorgung des gebrühten und ausgepressten Kaffeekuchens in der Brühkammer (3);
einer Steuereinrichtung (10);
einem mit der Brühkammer (3) verbundenen Getränkeauslauf (23) zum Auslass des gebrühten Kaffeekonzentrats, vorzugsweise ausgelegt als eine Mischkammer oder versehen mit einer Mischkammer zur Mischung des Kaffeekonzentrats mit dem kalten Wasser.

7. Kaffeemaschine (1) nach Anspruch 6, **dadurch gekennzeichnet, dass** der Kaltwasserzulauf (20) über ein Kaltwasserventil (12) steuerbar ist.

8. Kaffeemaschine (1) nach Anspruch 6 oder 7, **dadurch gekennzeichnet, dass** der Heißwasserzulauf (19) mit einer Heizeinrichtung (8) versehen ist.

9. Kaffeemaschine (1) nach Anspruch 8, **dadurch gekennzeichnet, dass** die Konzentration K durch Vergleich der eingesetzten Kaffeemehlmenge und dem Volumenstrom heißen Wassers mit in der Steuereinheit gespeicherten Vorgabewerten ermittelt wird.

10. Kaffeemaschine (1) nach einem der Ansprüche 6 bis 9, **dadurch gekennzeichnet, dass** der zumindest eine Konzentrationssensor (17) in der Brühkammer (3) angeordnet ist.

11. Kaffeemaschine (1) nach einem der Ansprüche 9 bis 13, **dadurch gekennzeichnet, dass** die Vorratseinrichtung (2) für Kaffeemehl einen Vorratsabschnitt (4) zur Bevorratung von Kaffeebohnen mit einem Mahlwerk (13) aufweist.

12. Kaffeemaschine (1) nach einem der Ansprüche 9 bis 14, **dadurch gekennzeichnet, dass** der Kaltwasserzulauf (20) mit Leitungswasser aus einem Wasserleitungsnetz (18) und/oder aus einem kühlbaren Wasserbehälter speisbar ist.

13. Kaffeemaschine (1) nach einem der Ansprüche 9 bis 15, **dadurch gekennzeichnet, dass** das Kaltwasser eine Temperatur von weniger als 35°C, bevorzugt weniger als 20°C und ganz besonders bevorzugt im Bereich von 10°C bis 0°C aufweist.

## Claims

1. Method of making a fresh, cold coffee beverage from a predetermined quantity of coffee grinds, comprising the following method steps:
(S1) feeding the predetermined amount of coffee grinds into a brewing chamber (3);
(S2) producing a coffee concentrate from the fed predetermined quantity of coffee grinds by means of a brewing process in the brewing chamber (3), wherein the thus-produced coffee concentrate has a predeterminable multiple (VK) of a concentration (KN) of a normal drink quality for filter coffee with approximately 1.2 to 1.4% of dry substance component;
(S3) making a fresh, cold coffee beverage by mixing the thus-produced coffee concentrate with an amount of water corresponding with a predeterminable multiple (VM) of the quantity of produced fresh coffee concentrate, wherein production of the coffee concentrate comprises the following sub-steps:
(S2-1) brewing, free of pressure, the predetermined quantity of coffee grinds; and
(S2-2) subsequently brewing the pre-brewed quantity of coffee grinds at a defined pressure, and wherein in the subsequent brewing the following sub-steps are performed: (S2-2-1) producing a concentration (K) of the coffee concentrate; and (S2-2-2) terminating the brewing before the concentration (K) of the brewed coffee concentrate falls below the predeterminable multiple (VK) of the concentration (KN) of a normal drink quality for filter coffee with approximately 1.2 to 1.4% of dry substance component, wherein in addition the predeterminable multiple (VK) of the concentration (KN) of the drink quality is at least five times the concentration (KN) of the normal drink quality.

2. Method according to claim 1, **characterised in that** the pressure-free pre-brewing is carried by means of a predeterminable pre-brewing amount of hot water for a predeterminable, limited time segment and that the subsequent brewing of the predetermined quantity of coffee grinds is carried out by means of a predeterminable brewing quantity of hot water at a water pressure of less than 2 bar.

3. Method according to one of the preceding claims, **characterised in that** for making a fresh, cold coffee beverage, having a low delivery temperature, preferably of at most 15 K above the cold water temperature, use is made, for the mixing, of fresh mains water or water cooled to a predeterminable temperature.

4. Method according to claim 3, **characterised in that** the fresh, cold coffee beverage has a delivery temperature particularly preferably of at most 10 K above the cold water temperature.

5. Method according to claim 4, **characterised in that** the fresh, cold coffee beverage has a delivery temperature with particular preference of at most 5 K above the cold water temperature.

6. Coffee machine (1) as an automatic machine preferably in the form of a piston machine for making fresh, cold coffee beverages, for carrying out the method according to any one of the preceding claims, comprising:
a storage device (2) for coffee grinds ground to finished state or coffee grinds ground according to need from whole beans or a grinding device for producing coffee grinds from whole beans;
preferably a pressure regulating device (15) for providing the water pressure in accordance with requirements;
a brewing chamber (3) for producing fresh coffee concentrates from the coffee grinds;
a metering device (5) for metering the coffee grinds from the storage device (2) or the grinding device into the brewing chamber (3);
a hot water feed (19), which is connected with the brewing chamber (3), for pre-brewing and brewing the coffee concentrates;
a monitoring device (10) for determining a concentration (K) of brewed coffee concentrates;
a cold water feed (20), which is connected with the outlet (23), for cold water;
preferably a device for disposing of the brewed and pressed-out coffee cake in the brewing chamber (3);
a control device; and
a beverage outlet (23), which is connected with the brewing chamber (3), for the outlet of the brewed coffee concentrate, preferably designed as a mixing chamber or provided with a mixing chamber for mixing the coffee concentrate with the cold water.

7. Coffee machine (1) according to claim 6, **characterised in that** the cold water feed (20) is controllable by way of cold water valve (12).

8. Coffee machine (1) according to claim 6 or 7, **characterised in that** the hot water feed (19) is provided with a heating device (8).

9. Coffee machine (1) according to claim 8, **characterised in that** the concentration (K) is ascertained by comparing the set coffee grinds quantity and the volume flow of hot water with preset values stored in the control unit.

10. Coffee machine (1) according to any one of claims 6 to 9, **characterised in that** the at least one concentration sensor (17) is arranged in the brewing chamber (3).

11. Coffee machine (1) according to any one of claims 9 to 13, **characterised in that** the storage device (2) for coffee grinds has a storage section (4) for storage of coffee beans with a grinder (13).

12. Coffee machine (1) according to any one of claims 9 to 14, **characterised in that** the cold water feed (20) can be supplied with mains water from a water mains (18) and/or from a coolable water container.

13. Coffee machine (1) according to any one of claims 9 to 15, **characterised in that** the cold water has a temperature of less than 35° C, preferably less than 20° C and particularly preferably in the range of 10° C to 0° C.

## Revendications

1. Procédé d'obtention d'une boisson à base de café fraiche et froide à partir d'une quantité prédéfinie de café moulu comportant les étapes suivantes :
(S1) transfert de la quantité prédéfinie de café moulu dans une chambre de macération (3),
(S2) obtention d'un concentré de café à partir de la quantité prédéfinie de café moulu fournie par un processus de macération dans la chambre de macération (3), le concentré de café ainsi obtenu ayant un multiple prédéfini (VK) de la concentration (KN) d'une boisson de qualité normale pour un café filtre avec environ 1,2 à 1,4 % de substance sèche,
(S3) obtention d'une boisson à base de café fraiche et froide par mélange du concentré de café ainsi obtenu avec une quantité d'eau qui correspond à un multiple prédéfini (VM) de la quantité de concentré de café fraiche obtenue, l'obtention du concentré de café comportant les étapes partielles suivantes :
(S2-1) pré-macération en l'absence de pression de la quantité prédéfinie de café moulu, puis
(S2-2) macération de la quantité de café moulu pré-macéré sous une pression définie, et, lors de cette macération, les étapes partielles suivantes étant mises en oeuvre (S2-2-1) obtention d'une concentration (K) du concentré de café et (S2-2-2) achèvement de la macération avant que la concentration (K) du concentré de café macéré ne devienne inférieure au multiple prédéfini (VK) de la concentration (KN) d'une boisson de qualité normale pour un café filtre avec environ 1,2 à 1,4 % de substance sèche, le multiple prédéfini (VK) de la concentration (KN) de la qualité de boisson de qualité normale étant en outre au moins de cinq fois la concentration (KN) de la boisson de qualité normale.

2. Procédé conforme à la revendication 1,
**caractérisé en ce que**
le pré-macérage en l'absence de pression est effectué au moyen d'une quantité de pré-macérage prédéfinie d'eau chaude pendant un laps de temps limité prédéfini et la macération ultérieure de la quantité prédéfinie de café moulu est effectuée au moyen d'une quantité de macération prédéfinie d'eau chaude sous une pression d'eau de moins de 2 bars.

3. Procédé conforme à l'une des revendications précédentes,
**caractérisé en ce que**
pour obtenir une boisson à base de café fraiche et froide distribuée à faible température, de préférence au plus de 15 K au-dessus de la température de l'eau froide, lors du mélange on utilise de l'eau de ville fraiche ou de l'eau refroidie à une température prédéfinie.

4. Procédé conforme à la revendication 3,
**caractérisé en ce que**
la boisson à base de café fraiche et froide présente une température de distribution particulièrement préférentielle d'au plus 10 K au-dessus de la température de l'eau froide.

5. Procédé conforme à la revendication 4,
**caractérisé en ce que**
la boisson à base de café fraiche et froide présente une température de distribution particulièrement préférentielle d'au plus 5 K au-dessus de la température de l'eau froide.

6. Machine à café (1) totalement automatisée de préférence sous la forme d'une machine à piston pour l'obtention d'une boisson à base de café fraiche et froide pour la mise en oeuvre du procédé conforme à l'une quelconque des revendications précédentes comprenant :
un réservoir (2) pour du café déjà moulu ou moulu à la demande à partir de grains de café entiers ou un dispositif de moulage pour l'obtention de café moulu à partir de grains de café entiers,
de préférence un dispositif de régulation de pression (15) adapté à la demande au point de distribution de la pression d'eau,
une chambre de macération (3) pour l'obtention de concentré de café frais à partir du café moulu,
un dispositif de dosage (5) pour permettre de doser le café moulu provenant du réservoir (2) ou du dispositif de broyage dans la chambre de macération (3),
une arrivée d'eau chaude (19) reliée à la chambre de macération (3) pour permettre la pré-macération et la macération du concentré de café,
une unité de surveillance (10) pour obtenir une concentration (K) de concentré de café macéré,
une sortie d'eau froide (20) reliée à la sortie (23) pour l'eau froide,
de préférence un dispositif pour éliminer le tourteau de café macéré et pressé dans la chambre de macération (3),
un dispositif de commande (10),
une sortie de boisson (23) reliée à la chambre de macération (3) pour permettre la sortie du concentré de café macéré, de préférence réalisée sous la forme d'une chambre de mélange, ou équipée d'une chambre de mélange pour permettre le mélange du concentré de café avec de l'eau froide.

7. Machine à café (1) conforme à la revendication 6,
**caractérisée en ce que**
l'arrivée d'eau froide (20) est réglable par l'intermédiaire d'une soupape d'eau froide (12).

8. Machine à café (1) conforme à la revendication 6 ou 7,
**caractérisée en ce que**
l'arrivée d'eau chaude (19) est équipée d'un dispositif de chauffage (8).

9. Machine à café (1) conforme à la revendication 8,
**caractérisée en ce que**
la concentration (K) est déterminée par comparaison de la quantité de café moulu mise en oeuvre et du débit d'eau chaude avec des valeurs prédéfinie mises en mémoire dans l'unité de commande.

10. Machine à café (1) conforme à l'une des revendications 6 à 9,
**caractérisée en ce qu'**
au moins un capteur de concentration (17) est monté dans la chambre de macération (3).

11. Machine à café (1) conforme à l'une des revendications 9 à 10,
**caractérisée en ce que**
le réservoir (2) de café moulu comporte un tronçon de réservoir (4) pour le stockage préalable de grains de café équipé d'un broyeur à café (13).

12. Machine à café (1) conforme à l'une des revendications 9 à 11,
**caractérisée en ce que**
l'arrivée d'eau froide (20) peut être alimentée par de l'eau d'un réseau d'eau (18) et/ou d'un réservoir d'eau pouvant être refroidi.

13. Machine à café (1) conforme à l'une des revendications 9 à 12,
**caractérisée en ce que**
l'eau froide a une température de moins de 35°C, de préférence de moins de 20°C et de façon particulièrement préférentielle de l'ordre de 10°C à 0°C.
